# EUROPEAN PATENT APPLICATION

(11) **EP 3 483 484 A1**
(43) Date of publication of application: **15.05.2019**
(21) Application number: 18206836.1
(22) Date of filing: 17.07.2015
(51) Int. Cl.: F16J 15/12, B64C 1/36, C08J 9/40, C22C 1/08, F16J 15/06, H05K 9/00

(54) **ELASTOMERIC GASKET HAVING A FOAM METAL SKELETAL MEMBER**

(30) Priority: 18.07.2014 US 201462026352 P; 12.11.2014 US 201462078451 P
(62) Divisional of application: 15822384.2
(71) Applicant: The Patent Well LLC, Fort Worth, TX 76116 (US)
(72) Inventor: BOYD, Matt, Fort Worth, TX Texas 76133 (US); BUSBY, Jeff, Millsap, TX Texas 76066 (US); BOOMER, Kent, Aledo, TX Texas 76008 (US); DRY, Mike, Fort Worth, TX Texas 76109 (US); SAMUELSON, Emily, Fort Worth, TX Texas 76107 (US)
(74) Representative: Elsworth, Dominic Stephen

(57) **Abstract**

A gasket (10) for compressible placement between a first surface and a second surface is disclosed. In one embodiment, the gasket (10) has a cellular metal skeleton (12) embedded in a viscoelastic, pliable, deformable tacky polymer body (14). The skeleton (12) has multiple strands (12d), which connect to form multiple interconnected cells or pores (12b). The skeleton (12), prior to being encapsulated in the tacky polymer body (14), is typically about 75% or more void space. The void space is substantially filled in the manufacture of the gasket (10), with the tacky uncured polymer. The uncured polymer will set up or cure, and then the gasket (10) may be used.

## Description

This application claims priority from US Provisional Patent Application Serial No. 62/026,352, filed July 18, 2014; and Provisional Application Serial No. 62/078,451, filed November 12, 2014, both applications incorporated herein by reference.

### FIELD OF THE INVENTION

**1.** Gaskets, including tacky elastomeric gaskets having a reticulated cellular metallized or foam metal skeletal member.

### BACKGROUND OF THE INVENTION

**2.** Gaskets are typically provided between mating surfaces for providing, among other things, an effective environmental seal. However, gaskets are typically found in a wide variety of environments and, therefore, often have widely or substantially different properties. Some gaskets may be used in heavily corrosive environments, others in high pressure and high temperature environments, still others in environments that are subject to a variety of different chemicals or electrical properties. Thus, gaskets are typically designed for the specific environments and moreover are often a compromise among several different design objectives.

**3.** In an aircraft environment, gaskets are used to provide good environmental seal between two parts having a mating surfaces for placement of the gasket therebetween.

Aircraft gaskets may also be used in an environment, such as an aircraft antenna, where EMI (electromagnetic interference) or RFI (radio frequency interference) may occur due to a gap between the metallic body fuselage of the aircraft and the metal aircraft antenna. This gap may create a potential difference (voltage) and may adversely affect the transmission or receipt of radio frequencies from the antenna. A number of solutions to the EMI problem have been provided, wherein a part of the gasket is highly conductive and the gasket is compressed sufficiently to provide an electrically conductive path across the gap of, for example, of an antenna mounted to the fuselage of an aircraft.

**4.** Some of the solutions to the problems of EMI may be found in US Patent No. 6,309,742 (Culpepper 2001), the contents of which are incorporated herein by reference. The '742 patent discloses the use of an electrically conductive gasket comprising an open cell foam substrate having a skeletal structure in a range of pore density between about 80 to about 250 pores per inch, the open cell foam structure having a metal coating deposited therein. The metal coating is nickel and the gasket may have a defined range of volume resistivity, deformability, and recoverability.

**5.** In Applicant's issued US Patent Nos. 6,530,577; 6,695,320; and 7,229,516 (incorporated herein by reference), gaskets are disclosed that have a skeletal member that may be flexible and open, such as a woven member as a skeletal member impregnated with a polymer gel. The skeletal member provides certain properties to the gasket and the polymer gel body other properties. The polymer body, which may be a viscoelastic cured gel, may provide deformability and surface tack, and the skeletal structure substantially encapsulated by the body may provide shape, especially two dimensional shape, and structure to the gasket and, when metallic, may provide good conductivity between mating surfaces when the gasket is placed between the mating surfaces and compressed.

### SUMMARY OF THE INVENTION

**6.** A gasket for compressible placement between a first surface and a second surface, the gasket comprising: a viscoelastic, pliable, deformable, tacky polymer body; and a cellular metal skeleton embedded in the body, the skeleton having multiple interconnected strands, some of the strands meeting at nodes, the strands and nodes defining multiple interconnected cells or pores, the skeleton having a pore density which may be measured in an x, y and z dimension, the z axis being the shortest axis and normal to the x and y axis and the first and second aircraft surfaces and defining a skeleton thickness, the skeleton having a relative density of less than about 25%.

**7.** The gasket wherein the skeleton comprises regular-shaped cells.

**8.** The gasket wherein the skeleton comprises irregular-shaped cells.

**9.** The gasket wherein the skeleton has a pore density of between about 17 and 63 ppi.

**10.** The gasket wherein the skeleton has a pore density of between about 50 and 150 ppi.

**11.** The gasket wherein the skeleton has a pore density of between about 15 and 250 ppi.

**12.** The gasket wherein the mass density of the skeleton is between about .3 and .6 gr/cc.

**13.** The gasket wherein the skeleton has a thickness in the range of about 0.0125" to about 0.50".

**14.** The gasket wherein the skeleton has a relative density of less than about 10%.

**15.** The gasket wherein the skeleton requires greater than about 50 psi before there is about 20% or more of reduction to its original thickness.

**16.** The gasket wherein the resistance of the skeleton measured in the z dimension is less than about 2.5 milliohms.

**17.** The gasket wherein the strands and nodes of the skeleton are solid metal.

**18.** The gasket wherein the strands and nodes of the skeleton are metal with a non-metallic core.

**19.** The gasket wherein the body is a cured polyurethane gel.

**20.** The gasket wherein the polyurethane has a cured hardness of between about 40 and 150 (cone penetration).

**21.** The gasket wherein the cured body is tacky.

**22.** The gasket wherein the cellular skeleton is aluminum or aluminum alloy.

**23.** The gasket wherein the body is a cured polyurethane gel.

**24.** The gasket wherein the metal is nickel or nickel alloy.

**25.** The gasket wherein the metal is aluminum or aluminum alloy.

**26.** The gasket wherein cells have an average pore diameter in the range of about 0.01" to 0.125".

**27.** A gasket for compressible placement between a first aircraft surface and a second aircraft surface, the gasket comprising: a viscoelastic, pliable, deformable, tacky polymer body; a cellular metal skeleton embedded in the body, the skeleton having multiple interconnected strands, some of the strands meeting at nodes, the strands and nodes defining multiple interconnected cells or pores, the skeleton having a pore density which may be measured in an x, y and z dimension, the z axis being the shortest and being normal to the x and y axis and the first and second aircraft surfaces and defining a skeleton thickness, the skeleton having a cell volume of greater than 75%; wherein the skeleton comprises irregular-shaped cells; wherein the skeleton has a pore density of between about 17 and 63 ppi, wherein the pore density is substantially the same in the x, y and z dimensions; wherein the skeleton has a relative density of less than 30%; and wherein the strand and nodes of the skeleton are solid metal.

**28.** The gasket wherein the metal is nickel or nickel alloy.

**29.** The gasket wherein the metal is aluminum or aluminum alloy.

**30.** A method of making a gasket for compressible placement between a first surface and a second surface, the method comprising the steps of: providing an uncured polymer mix that will cure to a tacky, pliable gel; providing a cellular metal skeleton, the skeleton having multiple interconnected strands, some of the strands meeting at nodes, the strands and nodes defining multiple interconnected cells or pores, the skeleton having a pore density which may be measured in an x, y and z dimension, the z axis being the shortest axis and normal to the x and y axis and the first and second surfaces and defining a skeleton thickness; encapsulating the skeleton in the uncured polymer mix; and allowing the polymer to cure.

**31.** The method wherein the encapsulating step includes placing the skeleton and polymer mix in a mold until the gel cures, then removing it from the mold.

**32.** The method wherein the encapsulating step is achieved by combining the mix with the skeleton without a mold.

**33.** The method wherein the encapsulating step includes placing the skeleton and polymer mix in a mold and drawing a vacuum on the mold.

**34.** The method wherein the encapsulating step includes allowing gravity to urge the mix into the skeleton.

**35.** The method wherein the encapsulating step includes pressing the polymer mix into the skeleton.

**36.** A metal foam is a cellular structure the metal of which may be a solid metal, such as aluminum, as well as a large volume of open pores. The pores can be sealed (closed cell) or they can form an interconnected network (open cell), typically about 70 to 95% void space.

**37.** In one embodiment of Applicant's gasket, an open cell substrate is provided having a metal coating, substantially encapsulated with a viscoelastic or elastomeric body that provides a good environmental seal, and removes the voids in the foam skeleton such that there are substantially no pockets of air or gas.

**38.** In another preferred embodiment of Applicant's gasket, an open cell skeleton is provided with substantially solid metal struts and nodes defining the cells.

**39.** In another embodiment, a metal open cell foam, such as Duocel® available from Energy Research and Generation, Oakland, CA, or NiFoam from Recemat BV, The Netherlands, is substantially saturated, encapsulated and covered by a sticky, pliable body that will provide a good environmental seal when under compression between mating surfaces, including, in one embodiment, an aircraft antenna and an aircraft fuselage.

**40.** The elastomeric gel body provided to the various metal cellular skeletal structures set forth herein will provide a good environmental seal against gas or fluid leaks, as well as resistance to potentially corrosive hydrocarbons, such as jet fuel. Applicant's gel body will assist in vibration dampening and may be flexible and deformable under compression so as to conform to the workpiece and be substantially inert to the environment (air, moisture, hydraulics or other hydrocarbons) and inert (non-corrosive) to the material comprising the workpiece and base.

**41.** In one embodiment, the body encapsulating the foam metal is a cured, viscoelastic or elastomeric gel, which may be polyurethane, polyurea or other suitable material, poured and cured about the metal foam skeletal structure. One method of manufacturing the gasket disclosed herein is similar to that which may be found in US Patent Nos. 6,530,577; 6,695,320; and 7,229,516, but modified as set forth herein. The foregoing patents are incorporated by reference.

**42.** In one embodiment, the body encapsulating or enclosing the skeleton has a cured peel strength between about 0.1 and 2.0 pounds per inch width has a hardness of between about 40 and 150 (measured with a 37.5g half cone penetrometer), a tackiness as set forth in the patents incorporated by reference, and a viscosity that allows it to deform and flow under compression in the range of about 10 to 500 psi. In a preferred embodiment, the chemical composition of the body may be a two-part self curable polymer mix: polyurethane, polyurea, fluorosilicone rubber or any other suitable composition. In another embodiment, the gel body comprises a two-phased colloidal system typically a dispersed phase and a continuous phase providing a viscous, jelly-like or gel product for the body to create an effective environmental seal.

**43.** In a preferred embodiment of the gasket, there may be a unitary integral, solid gasket (substantially no air or gas pockets) comprised of a celular metal skeleton and a sticky, polymeric, viscoelastic elastomer body, which gasket in cross-section is substantially free of any air containing voids and provides a body thickness (pre-compression) that typically exceeds foam metal skeletal thickness by at least a 2.5 mil. In a preferred embodiment, the foam metal skeleton is sheet-like and the body enclosing or encapsulating the sheet-like metal skeleton is sheet-like also with the same perimeter or exterior shape.

**44.** In a preferred embodiment, the cellular metal skeleton is a conductive metal with sufficient conductivity to overcome EMI when placed under compression between spaced apart metallic bodies. The metal of the skeleton may include the following metals: aluminum, copper, silver, carbon, silicon carbide, and nickel (including alloys of these metals). The metals comprising the skeleton of the gasket may be coated or uncoated and, if coated, may be coated with another metal, such as silver, nickel or other suitable material.

**45.** In a preferred embodiment, the skeleton is cut to size and is placed in a mold and a two-part polymer is applied with an applicator in a thick, syrupy uncured mix that will cover and surround and work its way through (or is forced through) the voids of the metal, and cure to form an elastomeric tacky body, which substantially encloses or encapsulates the skeleton.

**46.** The skeletal structure typically has free and complete communication between all of the voids (is open), such that it is a continuous integral structure with a plurality of voids or openings, such that there is complete communication between all the voids. Such a structure may be found in US Patent No. 3,616,841, incorporated herein by reference, and is available from Energy Research & Generation, Oakland, CA, under the mark Duocel®.

### BRIEF DESCRIPTION OF THE DRAWINGS

Fig. 1 is an illustration of a skeleton with irregular-shaped pores.
Fig. 1A is an illustration of a skeleton with a regular structure.
Figs. 1B and 1C are photographs of the skeleton of Figs. 1 and 1A, respectively.
Fig. 2 is a detail perspective view of the cell structure of the skeleton.
Fig. 2A and 2B are cross-sectional views of a small portion of the gasket, Fig. 2A showing the manner in which a gasket body may extend beyond the skeletal structure and Fig. 2B a close up of a cell of the skeleton and the manner in which it may be saturated with the body material.
Figs. 2C and 2D illustrate cross sections thru the strands.
Fig. 3 is a perspective exploded view of an assembly that may use applicant's gasket used with an aircraft antenna. Fig. 3A is a close up cross-sectional view illustrating Applicant's gasket under compression.
Figs. 4 and 4A are cross-sectional views showing the relationship between the skeletal member and the gasket body and some dimensions of the gasket body and skeletal member.
Figs. 5A and 5B are cross-sectional views of two methods of manufacturing Applicant's gasket.
Fig. 5C is a perspective view of a portion of the gasket in an embodiment that includes conductive or non-conductive particulate filler.
Figs. 5D, 5E and 5F illustrate perspective views of methods to manufacture the applicant's gasket.
Figs. 6, 7 and 8 are top views of three different shaped gaskets made by the methods and having the structure and function disclosed herein.
Figs. 9, 10, and 11 illustrate the use of Applicant's novel elastomeric foam metal gasket for use on an aircraft with sealing an aircraft fuel access door to the surface of an aircraft fuselage or skin.

### DETAILED DESCRIPTION OF THE PREFERRED EMBODIMENTS

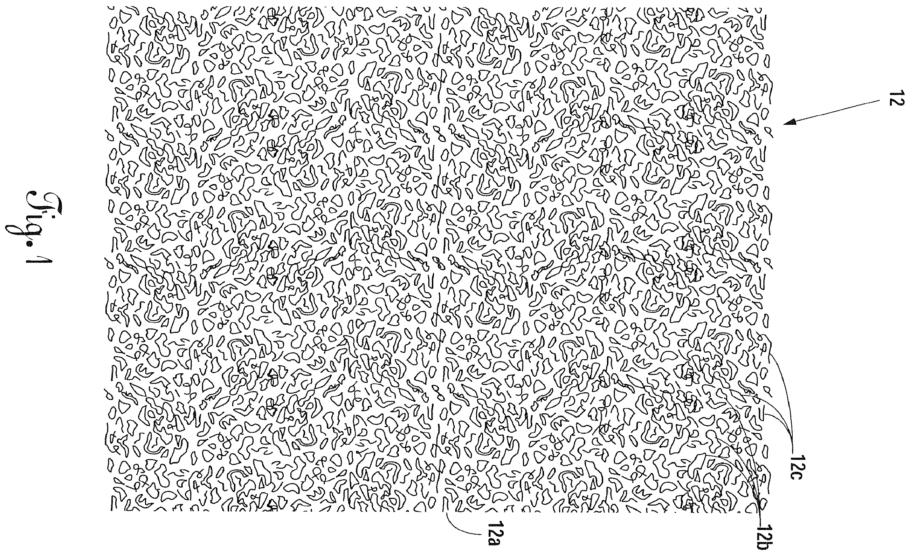

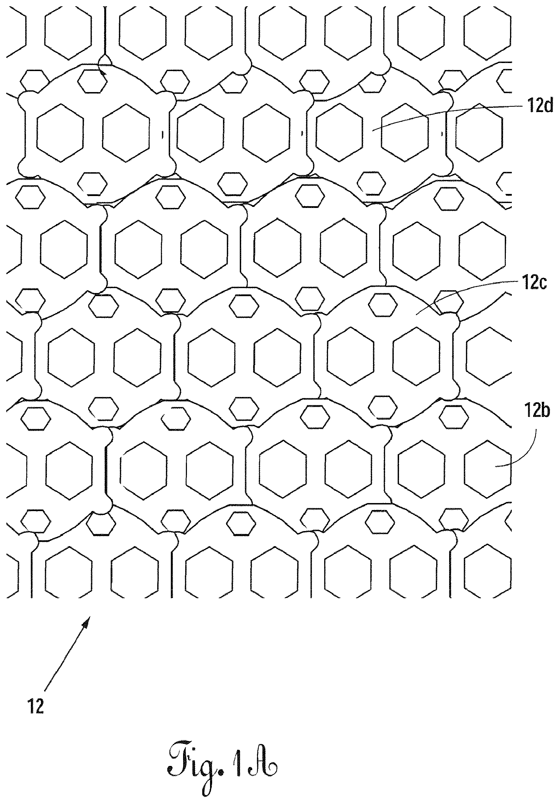

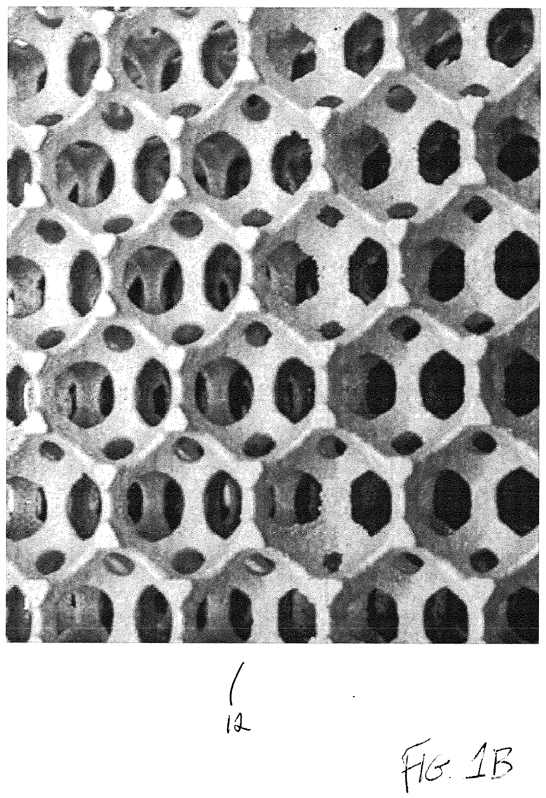

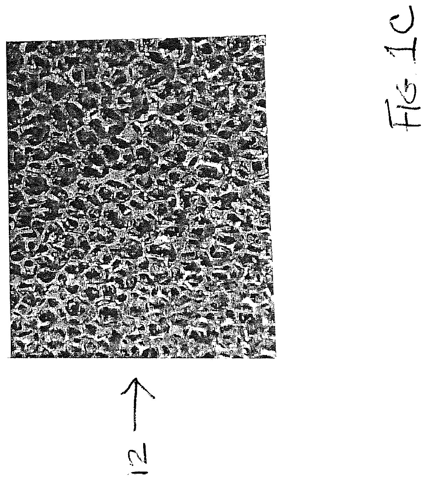

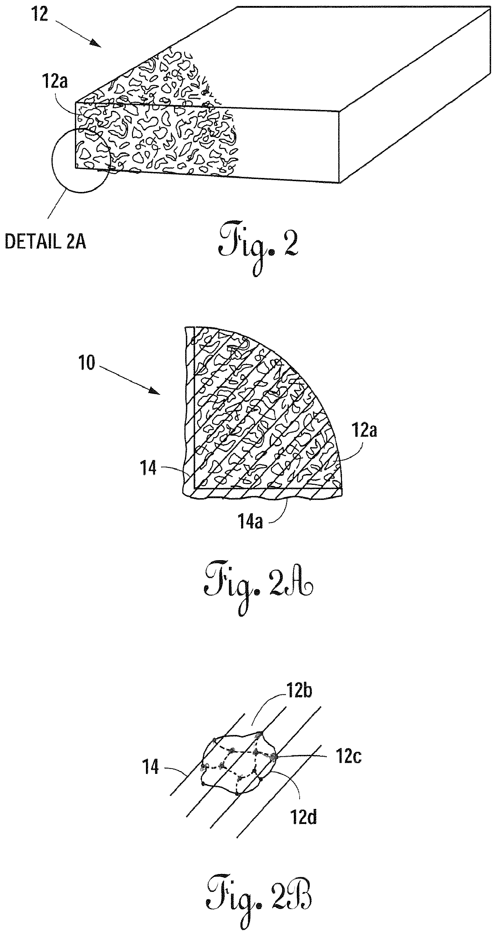

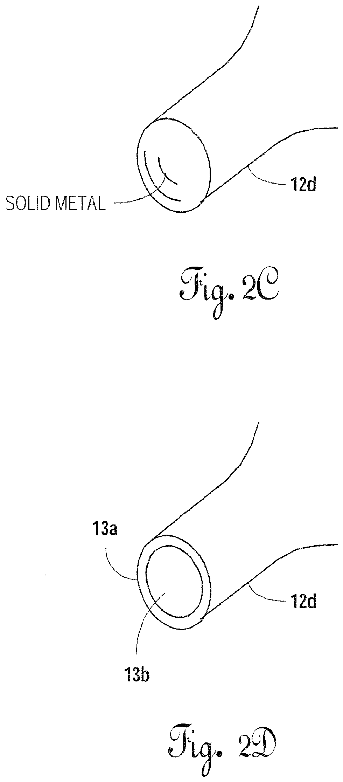

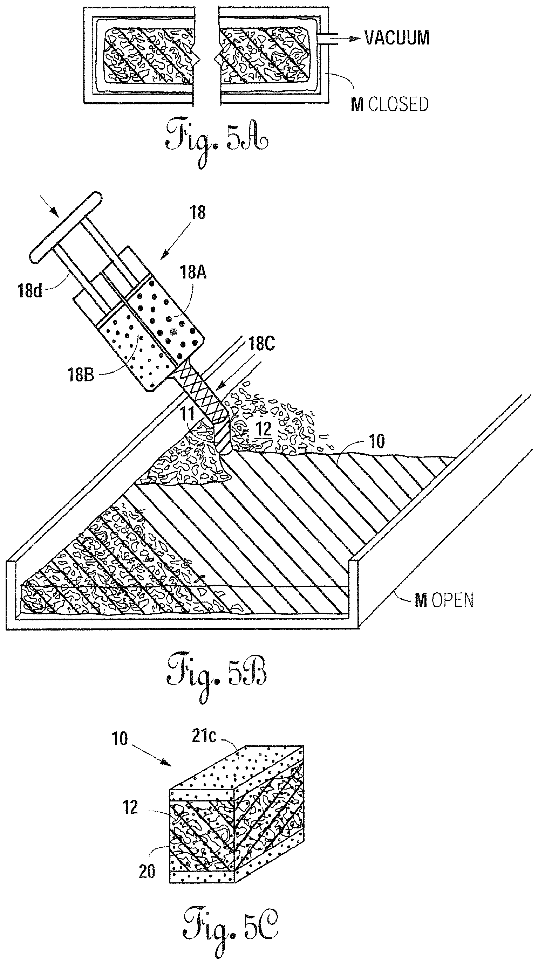

**60.** Fig. 1 illustrates a perspective illustration of a cellular metal skeleton 12 of the type which may be used in gasket 10 (see Fig. 2A). Figs. 2, 2A, 2B, 2C, 2D, 3A, 4 and 4A illustrate Applicant's gasket 10 comprising a metal skeleton 12 substantially saturated with a gasket body 14. Skeleton 12 may be a foam metal skeleton, in one embodiment; a reticulated open cell foam, in one embodiment, Duocel® foam. The term foam metal or cellular metal skeleton may refer to an all metal skeleton or a skeleton with strands having a non-metallic core. Gasket body 14 may be a cured polyurethane, polyurea or other suitable polymer gel two component mix 11 (see Fig. 5B) that is applied with an applicator 18 and allowed to cure after saturating skeleton 12.

**61.** In Figs. 1, 1A, B, C, 2, 2A, and 2B, skeleton 12 is seen to have a skeleton perimeter 12a, multiple open cells 12b each one that may comprise multiple struts or strands 12d that are joined at nodes 12c. Each cell (for example, see Fig. 2B) is joined to multiple other cells and they are intertwined as seen in a cross-section view, Fig. 2A. In one configuration, each cell 12b is configured generally like a "bucky ball" and as substantially set forth in the '841 patent incorporated herein by reference (see also Figs. 1A and 1C). The skeletons may be as substantially set forth and may be made by the methods set forth in US Patent Nos. 6,309,742 and 3,616,841. Briefly, the foam metal body of the '841 patent may be "all metal" (see Fig. 2C, cross-section of a strand), whereas the foam metal body of the '742 patent may include metal deposited on a non-metallic foam substrate (see Fig. 2D). Either foam metal skeleton or any other cellular metal skeleton may be used with the pliable gasket body 14 to provide the suitable gasket 10 for use in a number of environments. Fig. 2C illustrates that the strands may be solid metal (or metal with an open core), while Fig. 2D illustrates that in cross-section, strands 12d may be a metal coated 13a, deposited on a core 13b, which may be non-metal such as a polyurethane reticulated foam core. This skeleton may sometimes be termed a metalized foam. The strands of Fig. 2D sometimes provide more "give" (less stiff) and resiliency than skeletons made from the solid metal strands of Fig. 2C.

**62.** Fig. 1A illustrates an embodiment of a skeletal structure 12, in which the pores are regular shaped, that is, generally defined by regularly orderly shaped cells, at least in three dimensions (see Fig. 1A), in one view being honeycomb and, in one embodiment, honeycomb shaped. In the embodiment of the skeleton set forth in Fig. 1, the pores are somewhat random in size, shape, and spacing (three dimensioned), thus deemed "non-regular." Both skeletons may have the same pore density and void space.

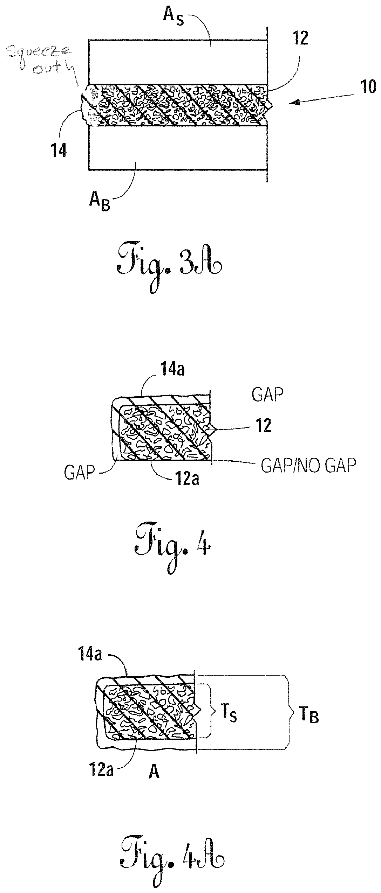

**63.** Gasket body 14 may have a perimeter 14a as seen in Figs. 2, 4, and 4A, which perimeter 14a may, in one embodiment, extend pass all of the outer surfaces of the metal skeleton 12 a distance of about 1 mil up to about 20 mil. In another embodiment, the perimeter 14a make extend past one, two or more faces or surfaces of the skeleton 12, depending upon the use. This is illustrated with the "gap" in Figs. 4 and 4A (no gap on the lower surface in Fig. 4A).

**64.** A range of thicknesses Ts for the skeleton 12, which in one preferred embodiment may be tabular (and may contain holes for fasteners or other items), is in the range of about 20 to 150 mil. A preferred thickness (shortest dimension) of body Tb in a preferred embodiment is tabular, essentially the same shape as the metal skeleton 12, and substantially saturating the cells thereof, Tb in one embodiment, in the range of about 30 to 200 mil.

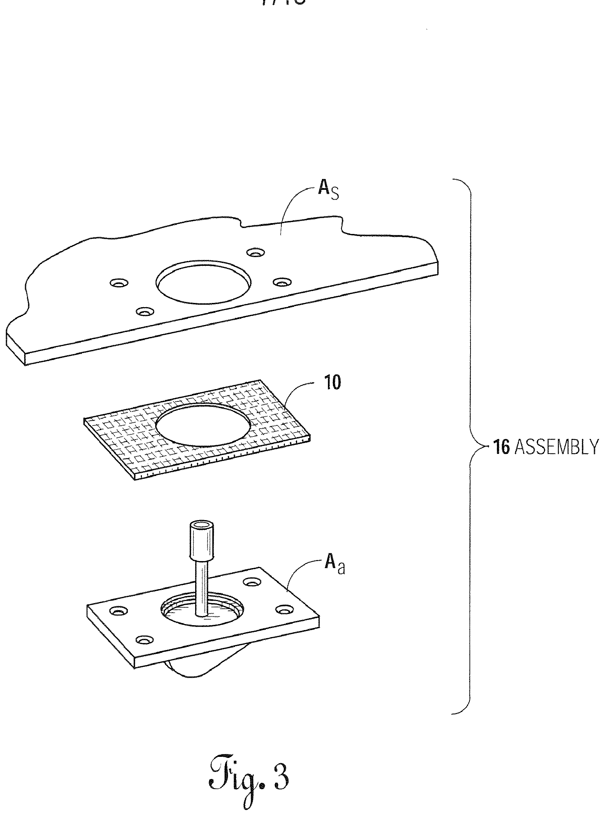

**65.** Fig. 3 illustrates one environment or assembly in which gasket 10 may be used, that is, between two parts, here, aluminum antenna Aₐ and aluminum outer surface Aₛ of an aircraft. These parts Aₛ and Aₐ represent the skin of an aircraft Aₛ and an aircraft antenna (Aₐ) with an embodiment of Applicant's gasket 10 therebetween. Fasteners (not shown) are entrained in the holes illustrated and the gasket is typically compressed between the moveable workpiece (antenna) and static base (aircraft outer surface). Compression will tend to squeeze out the pliable sticky, soft body material, which may extend (uncompressed) above or below the surface of the skeleton, which squeeze out may be seen in Fig. 3A. Typically, the gasket 10 may be die cut as set forth below, such that the perimeter of the gasket conforms to the perimeter of the workpiece, here, in one embodiment, an aircraft antenna.

**66.** In Fig. 3A, squeeze out is seen extending past the edges of As and Ab, as well as past the edge of the skeletal member. This occurs under compression and may be wiped clean with an alcohol soaked cloth, if desired. The greater the compression, the greater the squeeze out. In Figs. 4 and 4A, it is seen that there may be a perimeter 14a of gel body extending above or below one or both of the upper or lower surface of the skeleton creating a gap. Additionally, there may or may not be a gap along the perimeter. For example, Fig. 4 illustrates that prior to compression the body extends beyond the perimeter, sidewalls and the top of the skeleton, leaving a gap, but there being no gap on the bottom surface. In Fig. 4A, there is a gap that is a difference between TS, referring to skeletal thickness and TB referring to body thickness, the gap defining a perimeter 14a typically comprised of gel.

**67.** The gel or body material that is on the gasket surfaces facing the faying structures is used to create a good environmental seal between the two pieces that generate the compression on the gasket. In one embodiment, the skeleton is substantially soaked with the gel such as polyurethane gel and there is only a very thin veneer on the top surface and the bottom surface of the gasket, prior to compression, amounting to only about 1 or 2 two mil. In this embodiment there may be substantially no perimeter gap, could just a thin veneer of gel along the perimeter of the skeleton. When a very thin layer or veneer of gel is provided, there will be, when under compression, less or limited squeeze out. In one embodiment, the skeleton may be undercut; that is, cut back a few millimeters from the edge of the workpiece. In this embodiment, when compression occurs between the movable workpiece and the base, the squeeze will tend to fill the undercut.

**68.** Figs. 5A and 5B illustrate two ways to make the gasket illustrated herein. An important objective in making the gasket is soaking the skeleton so that substantially all of the voids contain the body material. These two methods illustrated combine the uncured fluid, viscous or semi-solid mix 11 (typically in the viscosity range of 18,000 to 42,000 cps at about 24-26°C) that will form gasket body 14 with the metal skeleton, such that there is soaking or encapsulation of the skeleton. The first illustrated cross-sectional view of Fig. 5A uses a substantially closed mold M in which is placed in (vacuum assisted) close proximity to the walls thereof, metal skeleton 12. A liquid or semi-solid curable two-part mix 11 is applied, at least sufficient to fill the skeletal voids. Closed mold (which may be used with a bag, not shown) then has a vacuum V drawn on it to draw out air and ensure investment of the skeleton with the mix prior to the mix curing.

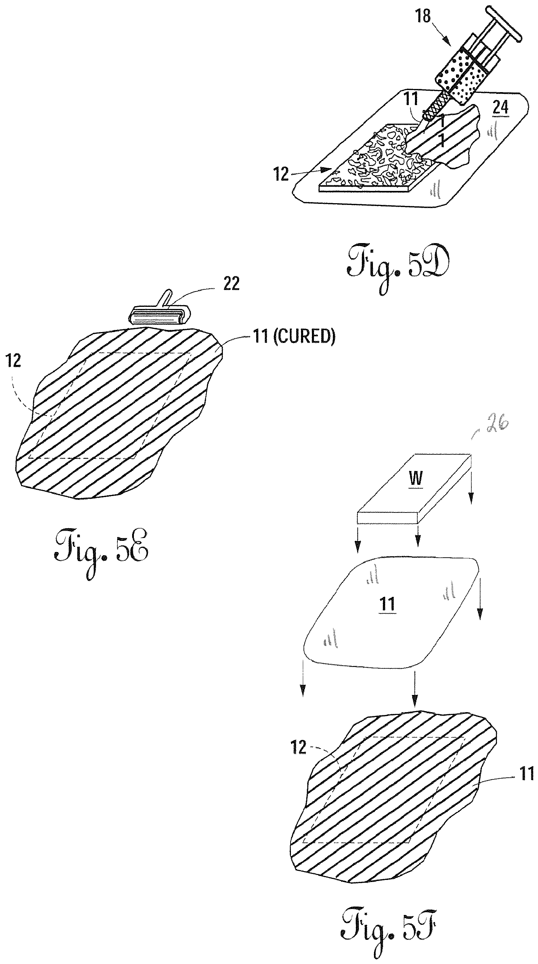

**69.** Fig. 5B illustrates a gravity displacement method with an open mold in which skeleton 12 is laid, the skeleton closely configured to the floor and side walls of the mold. An applicator 18 with a forcing element 18d and two compartments 18a/18b applies a two-part mix 11, which mixes in nozzle 18c of the applicator. Under the impetus of gravity, and/or with the assistance of a roller 22 or weight 26 (see Figs. 5E and 5F), the uncured liquid or syrupy semi-solid mix will settle (or be forced) into the voids and, over time (typically between about 30 and 120 minutes), will cure in place. In an alternate embodiment, some of the voids may have some air trapped (which may be forced out with a "squeegee" roller 22 or other tool prior to curing), but at least the majority of the cells will be at least partially and preferably completely filled upon curing with the mix.

**70.** Figures 5D and 5E illustrate a moldless use of gravity or gravity assisted (tool 22) method. Here skeleton 12 is placed on release film 24 and uncured mix 11 is applied. It will soak in under its weight, and may be assisted by using tool 22 to force the uncured mix into the voids of skeleton 12. The skeleton may be cut to shape first, before application of mix or cut later, after curing. Following curing of mix, the edges may be trimmed to the skeleton shape. Figure 5F illustrates another method, moldless, of making a cellular metal gasket encapsulated with polymer gel. Here, like Fig. 5D, the uncured mix is applied. A second release film 24 is laid over top the uncured mix and, on top of the second release film, a weight 26 is applied, to "force" uncured mix into the voids of the skeleton. Upon curing, weight 26 and release paper 24 are removed. The skeleton is then cut to shape (of workpiece, for example) before adding the polymer (encapsulated) or after curing.

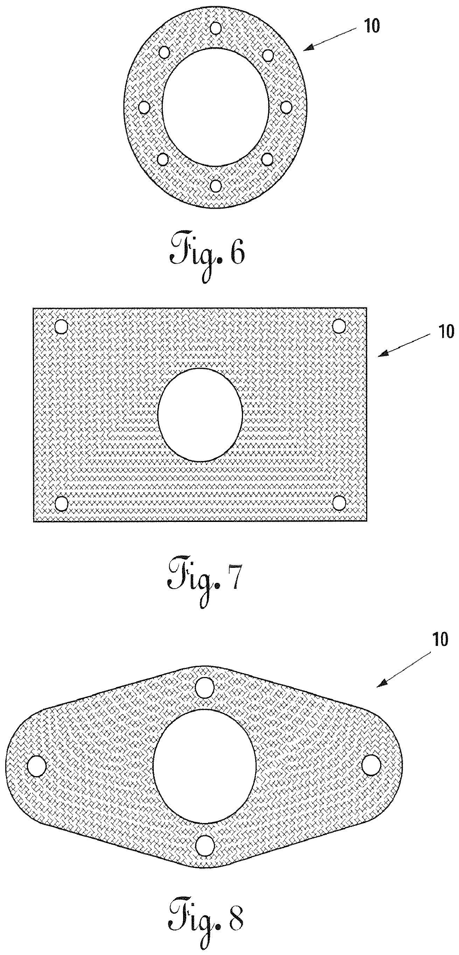

**71.** Figures 6, 7 and 8 illustrate various patterns of gaskets that may be diecut from the gasket stock that is removed from the mold following curing. Figure 6 illustrates a generally circular gasket, Figure 7 a generally rectangular gasket, and Figure 8 a generally straight-sided oval shape. These gaskets may be used in aircraft assemblies or other suitable environments, including EMI shielding applications. They typically have fastener holes that may have large internal openings, in one embodiment, for carrying electrical conductors to an external antenna.

**72.** In addition to the body preferably comprising a gel, such as a polymer gel, the body may also have dispersed throughout thereof, many thousands of tiny electrically conductive particles or filler 20 (see the "dots" in Fig. 5C). Conductive parties may be all or partially metallic particles, such as those set forth in Publication US 2013/0068519 (US Application 13/643,331, filed 5/10/2011), the contents of which are incorporated herein by reference. These at least partly conductive particles may be mixed with gel to form a top 21c and/ or bottom 21d layer on the body. The conductive particulate filler 20 may include carbon, Graphenol, Graphene, and conductive metals, such as copper, nickel, silver, aluminum, tin, and alloys thereof, in one embodiment, nanoparticles; in another, macro-particles with diameters in the nano range. The conductive filler may be in amounts of 20-80% of total weight of the body (polymer gel) and may be any shape and size in the micron, submicron or other suitable range. Suitable shapes may be micron-size spheres, flakes, and fibers. In the '519 publication, elastomeric polymers are set forth and any of those listed in that publication may be used as all or part of the body 14 set forth herein.

**73.** The manufacturing of the cellular metal skeleton, in one embodiment, may start with an open cell polyurethane foam that is being metallized. Subsequently, the polyurethane is removed by pyrolosis. A cellular metal skeleton and the gaskets set forth herein may be used in applications where high electrical and thermal conductivity are of importance. In addition, where high strength and rigidity are required, the metal may be further chromised and further treated. The result is a three-dimensional, extremely porous (so as to take up the gasket body), electrically conductive (low resistance) structure of unexpected strength and wear resistance, and high corrosion resistance.

**74.** Cellular metal can be cut with a shear knife or with circular saws; it may be laser cut, EDW machined, rolled, drilled, braised, etc. In one embodiment, it may include a pre-compressed thickness and may be compressed prior to application to the workpiece, to a desired thickness. While nickel foam may be used as a skeletal structure, copper foam and even titanium foam may be used or non-foam cellular metal skeleton of the same metals may be used. The nickel may be alloyed with chromium to form a nickel chromium skeleton material or further alloyed with aluminum to form a nickel chromium aluminum to improve oxidation resistance at high temperatures in other embodiments.

**75.** The pore size of the cellular skeleton may be indicated by a pore range number or ppi (pores per linear inch) which may be termed pore density. Some embodiments of Applicant's skeleton has a ppi range of about 17 to 63, with an average pore diameter in a first range of about 0.01" to 0.025" and a second range of about 0.01" to 0.125". The gasket may have a thickness of about .055 to .150 inches in a first range of about 0.0125" to about 0.50" in a second range (compressed or uncompressed). Other embodiments of Applicant's cellular metal skeleton may have a ppi range of about 47-53 and an average pore diameter of about .4 mm and a thickness in the range of about .055 inches to . 063 inches. Other embodiments may have a ppi range of about 27-33 and a thickness of about .125 inches. Yet another embodiment of Applicant's skeleton is nickel or aluminum with a ppi range of about 57-63, average pore diameter of about .35 mm and a thickness of about .055 inches. The pore density is typically uniform whether measured from x, y or z axis or any other orientation.

**76.** Any of the aforementioned foams or any cellular metal may be compressed to a thickness of between about 70 to 90% of original thickness (reduced by 10-30% of original thickness cause by squashing cells) (up to 50% for Al) prior to application of the gel to form the gasket in a thickness range of about .0125 inches to .020 inches. This reduction is produced by a psi application of between about 30-350 psi. In one embodiment, the metal cellular skeleton produces a resistance of 2.5 milliohms or less when used in a polyurethane gel body, with the metallized skeleton pre-crushed to a thickness of between about 12.5 and 20 mil. In another embodiment, the metallized cellular skeleton is annealed before application of the gel.

**77.** In one embodiment, a skeleton has an open cell structure of "struts" 12d, a three-dimensional hollow skeletal metal where the cavities or voids cover more than in one embodiment about 90% of the total volume. It is very strong, yet has a low density compared to solid material. The densities may fall in the range of about 0.3 to 0.6 grams per cubic centimeter. The relative density indicates the mass ratio between the porous metal foam and the mass of the same volume of the basic solid material. Relative density (void/solid) may be, in one embodiment, less than about 5%, in another embodiment, less than 30%, in yet another embodiment about 2-25%.

**78.** The skeleton may be metal foam (also called cellular metal) and can be any metal or alloy. The skeleton may be made from a number of processes. In one embodiment, aluminum is foamed in a liquid state and then cooled quickly to maintain its shape, and provide an effective skeleton when used with a polyurethane gel body.

**79.** Compressive strength is proportional to the density of the metal. In one embodiment, an aluminum alloy of AA6061 is used for the metal. It may be heat treated to adjust strength and ductility. Ductility can be increased via annealing - at the cost of strength. Annealing is meant to increase ductility and eliminate, if desired, the effects of string hardening and cold work components or prior heat treatments, and to avoid any hardening effects through natural aging.

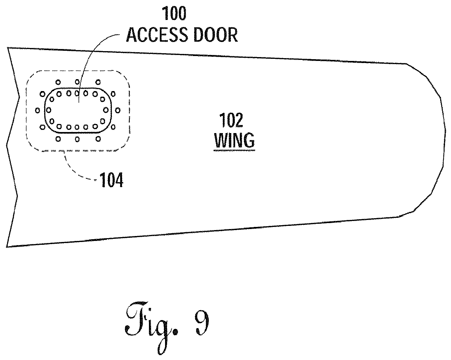

**80.** Figs. 9, 10, and 11 illustrate the use of Applicant's novel cellular metal elastomeric gasket 10 on an aircraft fuel access door 106. An aircraft fuel access door 106 may be mounted on a wing 102 of an aircraft using a retainer ring 108. Removal of access door 106 provides access fuel tank 104, typically located within the wing, for refueling of an aircraft. Access door 106 may be engaged with fasteners 112 to captured blind nuts 114 for fastening or free nuts 116 to hold the retainer ring 108 in place. Other fasteners may fasten through fuel access door 106 into retainer ring 108.

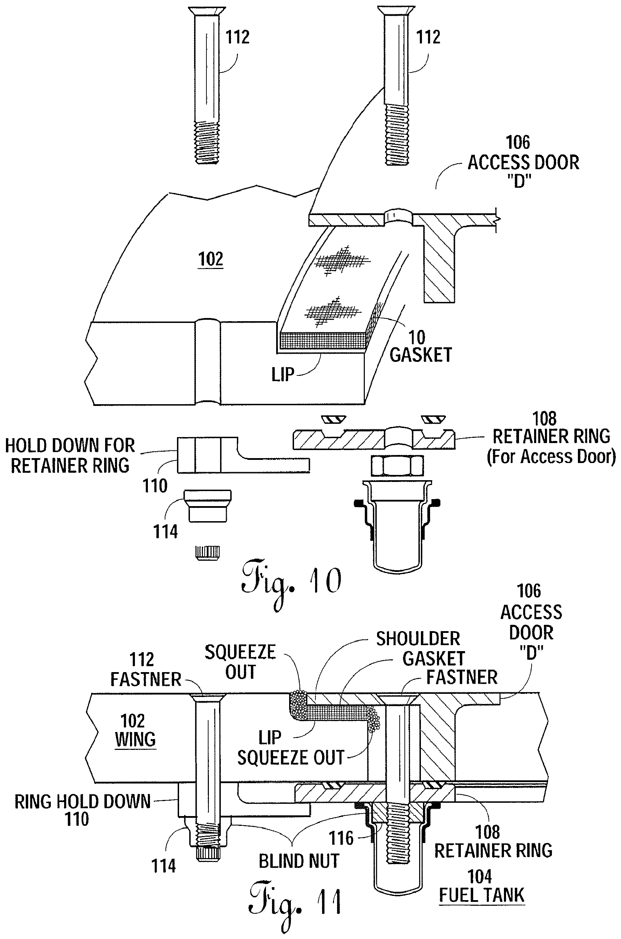

**81.** Between a shoulder on the perimeter of fuel access door 106, Applicant's gasket 10 may be placed such that threading fasteners 112 through fuel access door 106 into the retainer ring provides compression between wing 102 and the shoulder of the fuel access door as seen in Fig. 11. In one embodiment, fasteners 112 fastening the door to the retainer ring is sufficient to compress the gasket until there is contact between the elements on top and on bottom (shoulder and wing), so that there is metal (access door)/metal (metal foam)/ metal (metal ring) contact, generally caused by squeeze-out of the gel body during the process of fastening and compressing the fastener that is fastening the door to the retainer ring. In some instances, psi may be as high as about 2000 psi.

**82.** Although the invention has been described with reference to a specific embodiment, this description is not meant to be construed in a limiting sense. The skeletons are cellular metal, either metal foam or solid metal (which may have an open, unfilled core). On the contrary, various modifications of the disclosed embodiments will become apparent to those skilled in the art upon reference to the description of the invention. It is therefore contemplated that the appended claims will cover such modifications, alternatives, and equivalents that fall within the true spirit and scope of the invention.

## Claims

1. A gasket for compressible placement between a first surface and a second surface, the gasket comprising:
a viscoelastic, pliable, deformable, tacky polymer body; and
a cellular metal skeleton embedded in the body, the skeleton having multiple interconnected strands, some of the strands meeting at nodes, the strands and nodes defining multiple interconnected cells or pores, the skeleton having a pore density which may be measured in an x, y and z dimension, the z axis being the shortest axis and normal to the x and y axis and the first and second aircraft surfaces and defining a skeleton thickness, **characterised in that** the body has electrically conductive filler particles dispersed therethrough, the electrically conductive particles being Graphene particles, Graphenol particles or mixtures thereof.

2. A gasket according to Claim 1, wherein the electrically conductive filler particles include particles selected from the group comprising: metallic particles, partially metallic particles, carbon particles, copper particles, nickel particles, silver particles, aluminum particles, tin particles, and particles of alloys thereof.

3. A gasket according to Claim 1 or 2, wherein the electrically conductive filler particles are nanoparticles or macro-particles with diameters in the nano range, or in the micron or sub-micron size range.

4. A gasket according to Claim 1 or 2, wherein:
the body comprises a gel; or
the body comprises a gel and the gel is a polymer gel; or the body comprises a cured polyurethane gel; or
the body comprises a cured polyurethane gel and the polyurethane has a cured hardness of between about 40 and 150 (cone penetration).

5. A gasket according to Claim 3 or 4, wherein the electrically conductive filler particles are mixed with the gel to form a top and/or bottom layer on the body.

6. A gasket according to any preceding claim, wherein the electrically conductive filler is in amounts of 20-80% of total weight of the body.

7. A gasket according to any preceding claim, wherein the electrically conductive filler particles are micron-size spheres, flakes, or fibres.

8. The gasket of Claim 1 wherein:
the skeleton comprises regular-shaped cells or irregular-shaped cells; or
the strands and nodes of the skeleton are solid metal or metal with a non-metallic core; or
the metal of the cellular skeleton is aluminum or aluminum alloy or nickel or nickel alloy.

9. The gasket of Claim 1, the skeleton having a relative density of less than about 25% or less than about 10%.

10. The gasket of Claim 1 wherein the skeleton has a pore density of between about 17 and 63 ppi or between about 50 and 150 ppi or between about 15 and 250 ppi.

11. The gasket of Claim 1 wherein the mass density of the skeleton is between about .3 and .6 gr/cc.

12. The gasket of Claim 1 wherein: the skeleton has a thickness in the range of about 0.0125" to about 0.50"; and/or cells have an average pore diameter in the range of about 0.01" to 0.125".

13. The gasket of Claim 1 wherein the skeleton requires greater than about 50 psi before there is about 20% or more of reduction to its original thickness.

14. The gasket of Claim 1 wherein the resistance of the skeleton measured in the z dimension is less than about 2.5 milliohms.

15. The gasket of any preceding claim, wherein in an uncompressed state the body is thicker than the skeleton, and under compression the thickness of the body is reduced.
